# EUROPEAN PATENT SPECIFICATION

(11) **EP 3 159 426 B1**
(45) Date of publication and mention of the grant of the patent: **17.09.2025**
(21) Application number: 16194314.7
(22) Date of filing: 18.10.2016
(51) Int. Cl.: C23C 4/129, C08K 3/00, C08K 3/16, C23C 4/134, C23C 4/04, C04B 35/505, C04B 35/515, C04B 35/553

(54) **THERMAL SPRAY SLURRY, THERMAL SPRAY COATING AND METHOD FOR FORMING THERMAL SPRAY COATING**
THERMISCHER SPRÜHSCHLAMM, THERMISCHE SPRÜHBESCHICHTUNG UND VERFAHREN ZUM AUSBILDEN VON EINER THERMISCHEN SPRÜHBESCHICHTUNG
SUSPENSION ÉPAISSE POUR PULVÉRISATION À CHAUD, REVÊTEMENT PAR PULVÉRISATION À CHAUD ET PROCÉDÉ DE CRÉATION D'UN REVÊTEMENT PAR PULVÉRISATION À CHAUD

(30) Priority: 20.10.2015 JP 2015206656
(43) Date of publication of application: 26.04.2017
(73) Proprietor: Fujimi Incorporated, Kiyosu-shi, Aichi 452-8502 (JP)
(72) Inventor: Ibe, Hiroyuki, Kiyosu-shi, Aichi 4528502 (JP); Sato, Kazuto, Kiyosu-shi, Aichi 4528502 (JP); Tsuzuki, Kazuyuki, Kiyosu-shi, Aichi 4528502 (JP); Masuda, Takaya, Kiyosu-shi, Aichi 4528502 (JP)
(74) Representative: Grünecker Patent- und Rechtsanwälte PartG mbB

(56) References cited:
- EP-A1- 2 868 766
- WO-A1-97/18341
- JP-A- 2010 150 617
- JP-A- 2014 240 511

## Description

### BACKGROUND OF THE INVENTION

### 1. Field of the Invention

The present invention relates to a thermal spray slurry containing thermal spray particles, to a thermal spray coating, and to a method for forming the thermal spray coating.

### 2. Description of the Related Art

Thermal spray coatings are formed by thermally spraying thermal spray particles onto a substrate. Thermal spray coatings are used for various purposes depending on the characteristics of the materials constituting the thermal spray particles. For example, aluminum oxide thermal spray coatings are used as protective coatings for various components because aluminum oxide exhibits good electrical insulating properties, abrasion resistance and corrosion resistance (see for example Japanese Patent Application Laid-open No. 2014-240511).

Yttrium oxide thermal spray coatings are used as protective coatings for the components of semiconductor device manufacturing equipment because yttrium oxide exhibits good plasma erosion resistance (e.g. etching resistance, corrosion resistance). Such thermal spray coatings can be formed by thermally spraying not only thermal spray particles in powder form, but also slurries containing thermal spray particles (see for example Japanese Patent Application Laid-open No. 2010-150617). EP 2868766 A1 discloses a thermal spray material comprising granules of an oxyfluoride of yttrium (YOF). The granules may contain a fluoride of yttrium. Part of yttrium of the granules may be displaced with at least one rare earth element except yttrium, the molar fraction of said rare earth element relative to the sum of yttrium and the rare earth element being preferably 0.2 or less. WO 97/18341 A1 relates to methods whereby reprocessed nanoparticle powder feeds, nanoparticle liquid suspensions, and metalorganic liquids are used in conventional thermal spray deposition to form nanostructured coatings. In one embodiment, the nanostructured feeds consist of spherical agglomerates produced by reprocessing as-synthesized nanostructured powders. In another embodiment, a fine dispersion of nanoparticles is directly injected into a combustion flame or plasma thermal spray device to form nanostructured coatings. In another embodiment, liquid metalorganic chemical precursors are directly injected into the combustion flame of a plasma thermal spray device, whereby nanoparticle synthesis, melting and quenching are performed in a single operation. In these methods, ultrasound is used for disintegration of the as-synthesized particle agglomerates, nanoparticle dispersion in liquid media and liquid precursor atomization.

### SUMMARY OF THE INVENTION

The problem with thermal spraying of slurries is that the spray efficiency (e.g. coating speed) is lower than with thermal spraying of powders. An effective way to raise the spray efficiency of thermal slurry spraying is to increase the amount of thermal spray particles contained in the slurry. The trade-off, however, is that this also lowers the fluidity of the slurry, making it more difficult to form a thermal spray coating. Due to increasing degrees of integration of semiconductor devices, moreover, more precise management is required to prevent contamination by particles (e.g. foreign matter). For example, it is necessary to control very fine particles that would not have been a problem with prior art, so thermal spray coatings are now required to have even greater plasma erosion resistance.

It is therefore an object of the present disclosure to provide a thermal spray slurry capable of satisfactorily forming a good spray coating with superior plasma erosion resistance. Another object of the present disclosure is to provide a thermal spray coating with superior plasma erosion resistance using this thermal spray slurry, and a method for forming this thermal spray coating.

To solve these problems, the present disclosure provides a thermal spray slurry containing a dispersion medium, a dispersant and thermal spray particles comprising a compound containing yttrium (Y), oxygen (O) and a halogen element (X) as constituent elements (i.e. its elemental constituents), the molar ratio of the halogen element to yttrium (X/Y) being greater than 1.. The content of the thermal spray particles in the thermal spray slurry is 10% by mass to 70% by mass, and the viscosity of the thermal spray slurry is 300 mPa·s or less. The thermal spray particles comprise at least one selected from the group consisting of Y₅O₄F₇, Y₆O₅F₈, Y₇O₆F₉ and Y₁₇O₁₄F₂₃ in an amount of at least 95% by mass, and the halogen element (X) is fluorine. The thermal spray particles further comprise yttrium oxyfluoride.

Compounds containing yttrium (Y) and a halogen element (X) are materials having much greater plasma erosion resistance than yttrium oxide. With this composition, it is possible to achieve both good fluidity and good coating properties in a thermal spray slurry containing thermal spray particles comprising this compound containing yttrium and a halogen element. This is also desirable because it allows a thermal spray coating formed using this thermal spray slurry to have improved erosion resistance against halogen plasma.

In the technology disclosed here, halogen plasma is typically plasma generated using a plasma-generating gas containing a halogen gas (halogen compound gas). Specifically, typical examples include plasmas generated using either one or a mixture of two or more of SF₆, CF₄, CHF₃, ClF₃, HF and other fluorine gasses, Cl₂, BCl₃, HCl and other chlorine gasses, HBr and other bromine gasses and HI and other iodine gasses and the like, which are gasses used in dry etching processes and the like during semiconductor manufacture. These gasses may also be mixed with an argon (Ar) or other inactive gas.

The halogen element (X) is fluorine, and the thermal spray particles contain yttrium fluoride. With this composition, it is possible to satisfactorily form a thermal spray coating having superior plasma erosion resistance not only against chlorine plasma but also against fluorine plasma generated by plasma-generating gas that contains fluorine-containing gas for example.

The thermal spray particles comprise the compound that further contains oxygen (O) as a constituent element. With this composition, it is possible to further improve the plasma erosion resistance of a thermal spray coating formed using this thermal spray slurry against halogen plasma.

The halogen element (X) is fluorine, and the thermal spray particles contain yttrium oxyfluoride. Including thermal spray particles of yttrium oxyfluoride in the thermal spray slurry is desirable for increasing the plasma erosion resistance against fluorine plasma generated from plasma-generating gas containing fluorine-containing gas.

The thermal spray particles contain at least one selected from the group consisting of Y₅O₄F₇, Y₆O₅F₈, Y₇O₆F₉ and Y₁₇O₁₄F₂₃ in the amount of at least 95% by mass. With this composition, it is possible to reduce the percentage of yttrium oxide (Y₂O₃), which is a cause of particles, in the thermal spray coating formed from this thermal spray slurry.

In a preferred embodiment of the thermal spray slurry disclosed here, the sedimentation rate of the thermal spray particles contained in the thermal spray slurry is 30 µm/second or more. With such a composition, it is possible to maintain a high degree of fluidity of the thermal spray particles, and to satisfactorily form a dense thermal spray coating with low porosity (such as 10% or less).

The thermal spray slurry disclosed here also contains a dispersant. With this composition it is possible to maintain a high degree of fluidity of the thermal spray particles while increasing the thermal spray efficiency of the thermal spray slurry.

A preferred embodiment of the thermal spray slurry disclosed here may further contain a viscosity adjuster. It is thus possible to prevent an excessive increase in viscosity and maintain good fluidity even in a thermal spray slurry with a high solids concentration.

A preferred embodiment of the thermal spray slurry disclosed here may further contain an agglomerating agent. With this composition, it is possible to prevent aggregation of the thermal spray particles and increase the re-dispersibility of the particles even if the thermal spray particles are deposited in the thermal spray slurry.

In a preferred embodiment of the thermal spray slurry disclosed here, the average particle diameter of the thermal spray particles is 1 nm to less than 200 nm. With this composition, the thermal spray particles are less likely to be deposited in the thermal spray slurry.

In a preferred embodiment of the thermal spray slurry disclosed here, the average particle diameter of the thermal spray particles is 200 nm to 6 µm. With this configuration, it is possible to suppress changes in the properties of the thermal spray particles when the thermal spray slurry is thermally sprayed.

With the thermal spray slurry disclosed above, it is possible to achieve thermal spraying with good thermal spray efficiency even using thermal spray particles comprising a compound containing yttrium and a halogen element because the fluidity of the slurry can be maintained while increasing the amount of thermal spray particles (solids concentration) contained in the slurry. Therefore, a thermal spray deposit of this thermal spray slurry is a thermal spray coating containing yttrium and a halogen element as constituent elements, and can be formed as a dense coating with uniform coating properties. This thermal spray coating is especially desirable because it has improved plasma erosion resistance.

In another aspect of the present disclosure, the technology disclosed here provides a method for forming a thermal spray coating, wherein a thermal spray coating is formed by thermally spraying any of the thermal spray slurries described above. It is thus possible to obtain a dense thermal spray coating with uniform coating properties and superior plasma erosion resistance.

In a preferred embodiment of the method for forming a thermal spray coating disclosed here, a thermal spray coating is formed by high-velocity flame spraying of a thermal spray slurry containing water as the dispersion medium. It is thus possible to form a thermal spray coating with a composition similar to that of the thermal spray particles while suppressing oxidation of the thermal spray particles, and thus to form a thermal spray coating with superior plasma erosion resistance.

In a preferred embodiment of the method for forming a thermal spray coating disclosed here, a thermal spray coating is formed by plasma spraying a thermal spray slurry containing an organic solvent as the dispersion medium. It is thus possible to thermally spray more rapidly and at a relatively low temperature, allowing a thermal spray coating to be formed densely while suppressing oxidation and changes in the properties of the thermal spray particles, and thus to form a thermal spray coating with superior plasma erosion resistance.

In a preferred embodiment of the method for forming a thermal spray coating disclosed here, the thermal spray slurry is supplied to an axial-feed thermal spray system. Because the thermal spray particles in the slurry are thus loaded in the axial direction of the thermal spray heat source, more of the thermal spray particles can be made to contribute to coating formation in this way, allowing a thermal spray coating to be formed with greater thermal spray efficiency.
"Axial feed" is a method of supplying a thermal spray slurry from the center of a thermal spray heat source (such as a plasma arc or combustion flame) in the direction of generation of the thermal spray heat source or the axial direction of the torch nozzle.

In a preferred embodiment of the method for forming a thermal spray coating disclosed here, two feeds are used, and the slurry is supplied to the thermal spray system in such a way that the fluctuation cycles of the amounts of slurry supplied from these two feeds are in reverse phases to one another. It is thus possible to suppress agglomeration and sedimentation of thermal spray particles with a relatively large average particle size in the slurry, and supply the slurry at a roughly constant rate without irregularities. This is desirable because it allows a thermal spray coating to be formed with little variation in the coating composition.

In a preferred embodiment of the method for forming a thermal spray coating disclosed here, the thermal spray slurry is sent from a feeder and first accumulated in a tank immediately before the thermal spray system, and the thermal spray slurry in this tank is then supplied to a thermal spray system using natural gravity. It is thus possible to condition the thermal spray slurry in the tank immediately before the thermal spray system, suppress agglomeration and sedimentation of thermal spray particles with a relatively large average particle size in the slurry, and supply the thermal spray slurry at roughly constant rate without irregularities. This is also desirable because it allows a thermal spray coating to be formed with little variation in the coating composition.

A preferred embodiment of the thermal spray coating formation method disclosed here includes a step of supplying the thermal spray slurry to a thermal spray system via an electrically conductive tube. This is desirable because it serves to suppress generation of static electricity by the thermal spray slurry as it flows through the electrically conductive tube, making fluctuations in the supplied amount of the thermal spray particles less likely. The expression of "A to B" indicating a numericalrange is represent "A or more and B or less" unless otherwise noted.

### DESCRIPTION OF THE PREFERRED EMBODIMENTS

Embodiments of the present disclosure are explained below. Matters not specifically mentioned in this Description that are necessary for implementing the present disclosure can be understood and implemented by a person skilled in the art based on the instructions for implementing the invention described in the Description and on technical common knowledge in the field at the time of this application.

### (Thermal spray slurry)

The thermal spray slurry disclosed here contains a dispersion medium and thermal spray particles comprising a compound containing yttrium (Y), oxygen (O) and a halogen element (X) as constituent elements. This thermal spray slurry is prepared by mixing the thermal spray particles with the dispersion medium, for example. Mixing may be accomplished with a wing agitator, homogenizer or mixer.

The thermal spray particles contained in the thermal spray slurry comprise a compound containing yttrium (Y), oxygen (O) and a halogen element (X) as constituent elements. This compound may be a halide of yttrium (Y). Typical examples include fluorides (for example, yttrium fluoride (YF₃)), chlorides (for example, yttrium chloride (YCl₃)), bromides (for example yttrium bromide (YBr₃)) and iodides (for example, yttrium iodide (YI₃)) of yttrium and the like.

The compound containing yttrium (Y), oxygen (O) and a halogen element (X) is a ternary or higher compound containing any other elements. The ternary or higher compound is preferably an yttrium oxyfluoride containing oxygen (O) as a constituent element for example. Of course, a compound containing yttrium (Y), oxygen (O) and a halogen element (X) may also contain any element other than oxygen (O).

The proportions of the yttrium (Y), oxygen (O) and halogen element (X) making up the yttrium oxyfluoride are not particularly limited. For example, the molar ratio of the halogen element to yttrium (X/Y) is not particularly limited. As a preferred example, the molar ratio (X/Y) is greater than 1. Specifically, it is preferably 1.1 or greater, such as 1.2 or greater, or more preferably 1.3 or greater. There is no particular upper limit to the molar ratio (X/Y), which may be 3 or less. In particular, the molar ratio of the halogen element to yttrium (X/Y) is more preferably 2 or less, or still more preferably 1.4 or less (less than 1.4). In a more preferred example, the molar ratio (X/Y) is 1.3 to 1.39 (such as 1.32 to 1.36). This is desirable because such a high ratio of the halogen element to yttrium brings about increased resistance to halogen plasma.

The molar ratio of the oxygen element to yttrium (O/Y) is also not particularly limited. In a preferred example, the molar ratio (O/Y) may be 1, or more preferably less than 1. Specifically, it is more preferably 0.9 or less, such as 0.88 or less, or still more preferably 0.86 or less. There is no particular lower limit to the molar ratio (O/Y), which may be 0.1 or more for example. In a more preferred example, the molar ratio (O/Y) of the oxygen element to yttrium is more than 0.8 and less than 0.85 (preferably 0.81 to 0.84). Such a low ratio of the oxygen element to yttrium is desirable for suppressing the formation of oxides of yttrium (such as Y₂O₃) in the thermal spray coating due to oxidation during the thermal spray process.

In other words, the yttrium oxyfluoride may be a compound having an arbitrary ratio of Y, O and X, represented by a general formula such as Y₁Oₘ₁Xₘ₂ (for example 0.1 ≤ m1 ≤ 1.2, 0.1 ≤m2 ≤3). Such an yttrium oxyfluoride satisfies preferably 0.81 < m1 < 1, and more preferably 0.81 < m1 < 0.85 (such as 0.84 ≤ m1 ≤ 0.82). Moreover, preferably it satisfies 1 < m2 < 1.4, or more preferably 1.29 < m2 < 1.4, such as 1.3 ≤ m2 ≤ 1.38 for example.

A compound in which the halogen element is fluorine (F) and an yttrium oxyhalide is an yttrium oxyfluoride (Y-O-F) is explained as a preferred embodiment. The yttrium oxyfluoride may be for example a thermodynamically stable compound having a chemical composition represented by YOF, and having a ratio of 1:1:1 of yttrium, oxygen and the halogen element. It may be also be Y₅O₄F₇, Y₆O₅F₈, Y₇O₆F₉, Y₁₇O₁₄F₂₃ or another compound represented by the general formula Y₁O₁₋ₙF₁₊₂ₙ (in which 0.12 ≤ n ≤ 0.22 for example). In particular, Y₆O₅F₈, Y₁₇O₁₄F₂₃ and the like have the molar ratios (O/Y) and (X/Y) within the desirable ranges described above, and therefore have superior plasma erosion resistance and are desirable for forming dense and hard thermal spray films. Such an yttrium oxyhalide may be composed of a single phase of one kind of compound, or may be composed of a mixed phase, solid solution or compound obtained by combining any two or more different compounds, or a mixture of these or the like.

The yttrium oxyhalide were explained using examples having fluorine as the halogen element. The detailed composition and proportion of the yttrium oxyhalide contained in the thermal spray particles are not particularly limited. For example, the thermal spray particles may consist entirely of an yttrium oxyhalide.

For purposes of forming a thermal spray coating with superior plasma erosion resistance, the thermal spray particles preferably contain an yttrium oxyhalide. Such an yttrium oxyhalide is preferably contained in the thermal spray particles in a high proportion of 77% by mass or more. The plasma erosion resistance of yttrium oxyhalides is superior even to that of yttria (Y₂O₃), which is already known as a material with high plasma erosion resistance. Such an yttrium oxyhalide contributes greatly to improving plasma erosion resistance even when contained in a small quantity, but including a large amount as described above is desirable for obtaining extremely good plasma resistance. The proportion of the yttrium oxyhalide is preferably 80% by mass or greater (over 80% by mass), or more preferably 85% by mass or greater (over 85% by mass), or still more preferably 90% by mass or greater (over 90% by mass), or even more preferably 95% by mass or greater (over 95% by mass). For example, essentially 100% by mass (all except unavoidable impurities) is particularly desirable. Because the thermal spray particles contain such a high proportion of the yttrium oxyhalide, they may also contain another substance that more readily becomes a particle source.

When the thermal spray particles contain an yttrium oxyhalide, it may be desirable that the yttrium oxyhalide constitute all of the thermal spray particles. However, in the case of an yttrium oxyhalide of a composition (such as Y₁O₁F₁) that is relatively liable to oxidation, it is desirable to include a halide of yttrium in the amount of 23% by mass or less for example. The halide of yttrium contained in the thermal spray particles may be oxidized by thermal spraying, forming an oxide of a rare earth element in the thermal spray coating. For example, yttrium fluorides may be oxidized by thermal spraying, forming yttrium oxides in the thermal spray coating. Meanwhile, yttrium oxyhalides (such as Y₁O₁F₁) are also oxidized by thermal spraying, forming oxides of a rare earth element in the thermal spray coating. However, including a small amount of an yttrium halide together with the yttrium oxyhalide is desirable because oxidation of the yttrium oxyhalide is suppressed by the yttrium halide. However, since an excessive content of the yttrium halide may lead to particle source formation as discussed above, a content of more than 23% by mass is not desirable because it detracts from the plasma erosion resistance. From this standpoint, the percentage content of the yttrium halide is preferably 20% by mass or less, or more preferably 15% by mass or less, or still more preferably 10% by mass or less, such as 5% by mass or less. A more preferred embodiment of the thermal spray material disclosed here contains is essentially free of yttrium halides (such as yttrium fluoride).

To achieve even greater plasma resistance of the formed thermal spray coating, the thermal spray particles are also preferably composed so as to be essentially free of yttrium oxide (yttrium oxide: Y₂O₃) components. An yttrium oxide contained in the thermal spray particles may remain as is in the form of yttrium oxide in the thermal spray coating formed by thermal spraying. This yttrium oxide has extremely low plasma resistance in comparison with yttrium halides as described above. Therefore, when exposed to a plasma environment the part containing this yttrium oxide is susceptible to formation of a brittle modified layer, and the modified layer is likely to detach in the form of very fine particles. These very fine particles may then accumulate as particles on a semiconductor substrate. Accordingly, yttrium oxide that may serve as a particle source is preferably excluded from the content of the thermal spray slurry described here.

To be "essentially free of" a component in this description means that the percentage content of the component (yttrium oxide here) is 5% by mass or less, or preferably 3% by mass or less, such as 1% by mass or less. It may also mean that a diffraction peak corresponding to the component is not detected in X-ray diffraction analysis of the thermal spray material.

When yttrium halides and/or yttrium oxyhalides of multiple compositions (such as a; given as a natural number, a ≥ 2) are included in the thermal spray particles, the percentages contents of the compounds of each composition can be measured and calculated by the following method. First, the compositions of the compounds making up the thermal spray particles are specified by X-ray diffraction analysis. The yttrium oxyhalides in this case are determined down to the valence (element ratio) level.

Next, supposing that one kind of yttrium oxyhalide is present in the thermal spray material and the remainder is YF₃ for example, the oxygen content of the thermal spray particles is measured with an oxygen/nitrogen/hydrogen analyzer (for example, LECO Corporation ONH836), and the content of the yttrium oxyhalide can then be quantified from the resulting oxygen concentration.

When two or more kinds of yttrium oxyhalides are present or when an yttrium oxide or other compound containing oxygen is mixed in, the percentage of each compound can be quantified by the calibration curve method for example. Specifically, multiple different samples with varying percentage contents of each compound are prepared, each sample is subjected to X-ray diffraction analysis, and a calibration curve is prepared showing the relationship between main peak strength and the content of each compound. Based on this calibration curve, the contents can then be quantified from the XRD main peak strengths of the yttrium oxyhalide compounds in the thermal spray material to be measured.

The molar ratio (X/Y) and molar ratio (O/Y) in the yttrium oxyhalide can be determined for all the yttrium oxyhalides in the thermal spray particles by calculating the molar ratio (Xa/Ya) and molar ratio (Oa/Ya) of each composition, and then multiplying the abundance ratio of that composition by the molar ratio (Xa/Ya) and molar ratio (Oa/Ya) to obtain a total (weighted total).

The thermal spray particles can typically be prepared in a powder form. This powder may be composed of granulated particles obtained by granulating finer primary particles, or may be a powder composed primarily of aggregates of primary particles (may contain agglomerated forms). More preferably, it is a powder composed of aggregates of primary particles. From the standpoint of increasing the thermal spray efficiency when the particles are made into a slurry, the average particle diameter of the thermal spray particles is not particularly limited as long as it is about 10 µm or less, and the average particle diameter has no particular lower limit. The average particle diameter of the thermal spray particles may be 6 µm or less for example, or preferably 4 µm or less, or more preferably about 3 µm or less. There is no particular lower limit to the average particle diameter, which may be 1 nm or more for example, or preferably 10 nm or more considering the fluidity of the thermal spray material.

Ordinarily, fluidity declines as the specific surface area increases when fine thermal spray particles with an average particle diameter of about 10 µm or less are used in powder form in thermal spraying for example. This detracts from the suppliability of the thermal spray particles to the thermal spray system, causing the thermal spray particles to adhere to the supply pathway and otherwise inhibiting supply to the thermal spray system and reducing the ability to form a thermal spray coating. Due to their small mass, moreover, such thermal spray particles may be repelled away from the thermal spray flame or jet rather than being propelled toward the substrate. With the thermal spray slurry disclosed here, on the other hand, even if the average particle size of the thermal spray particles is 10 µm or less adhesion to the supply pathway and the like can be suppressed and good coat-forming performance maintained because the particles are prepared as a slurry out of considerations of suppliability to the thermal spray system. Since the particles are also supplied to the flame or jet in slurry form, they join the flow without being repelled by the flame or jet, and since the dispersion medium is removed in flight, it is possible to form a thermal spray coating while maintaining even greater thermal spray efficiency.

When the average particle diameter of the thermal spray particles is about 1 µm or more, the cumulative 50% particle size (D₅₀)in the volumetric particle size distribution as measured using a laser diffraction/scattering particle size distribution analyzer (Horiba, Ltd. LA-950) can be used. When measuring the average particle diameter, the volumetric 3% particle size (D₃), which is the particle diameter of the particle 3% from the smallest particle size, and the volumetric 97% particle size (D₉₇), which is the particle diameter of the particle 97% from the smallest particle diameter, may also be measured.

For particles with an average particle diameter of less than about 1 µm, the sphere-equivalent diameter calculated based on the specific surface area may be used. The specific surface area can be a value calculated by the BET1 point method from N₂ or other gas adsorption as measured by the continuous flow method using a specific surface area measurement device (Micromeritics FlowSorb II 2300). The threshold values for average particle diameter as measured by these methods are not strictly specified, and may be changed depending on the precision of the analytical equipment and the like.

### (Dispersion medium)

An aqueous dispersion medium or non-aqueous dispersion medium may be used as the dispersion medium.

Water or a mixture of water and a water-soluble organic solvent (mixed aqueous solution) can be used as the aqueous dispersion medium. Tap water, ion-exchange water (deionized water), distilled water, pure water or the like may be used as the water. One or two or more kinds of organic solvents uniformly miscible with water (such as C₁₋₄ lower alcohols or lower ketones) may be used for the organic solvent other than water constituting the mixed aqueous solution. Desirable examples include methanol, ethanol, n-propyl alcohol, isopropyl alcohol and other organic solvents. A mixed aqueous solution in which water constitutes at least 80% by mass (preferably at least 90% by mass, more preferably at least 95% by mass) of the aqueous solvent is preferably used as an aqueous solvent. In a particularly desirable example, this may be an aqueous solvent consisting essentially only of water (such as tap water, distilled water, pure water or purified water).

Typical examples of non-aqueous solvents are organic solvents containing no water. These organic solvents are not particularly limited, and examples include methanol, ethanol, n-propyl alcohol, isopropyl alcohol and other alcohols, and toluene, hexane, kerosene and other organic solvents either individually or as a mixture of two or more kinds.

The type and composition of the dispersion medium can be determined appropriately according to the method of spraying the thermal spray slurry, for example. That is, for example either an aqueous solvent or non-aqueous solvent may be used if the thermal spray slurry is sprayed by a high-velocity flame spraying method. One advantage of an aqueous dispersion medium is that the surface roughness of the resulting thermal spray coating is improved (the coating is smoother) over that obtained with a non-aqueous dispersion medium. One advantage of using a non-aqueous dispersion medium is that the porosity of the resulting thermal spray coating is lower than in a coating obtained with an aqueous dispersion medium.

The type of dispersion medium used can be selected appropriately depending on the solubility of the thermal spray particles and the method of spraying the thermal spray slurry. For example, an aqueous dispersion medium is desirable for high-velocity flame spraying of the thermal spray slurry. A non-aqueous dispersion medium is desirable for plasma spraying of the thermal spray slurry. However, an aqueous dispersion medium may be used instead for plasma spraying.

The content of the thermal spray particles in the thermal spray slurry, or in other words the solids concentration, is preferably at least 10% by mass, or more preferably at least 20% by mass, or still more preferably at least 30% by mass. In this case, it is easy to improve the thickness of the thermal spray coating manufactured per unit of time from the thermal spray slurry, or in other words the thermal spray efficiency.

The content of the thermal spray particles in the thermal spray slurry is also preferably no more than 70% by mass (less than 70% by mass), or more preferably no more than 60% by mass, or still more preferably no more than 50% by mass. **In** this case, it is easy to obtain a thermal spray slurry having the necessary fluidity for supplying to the thermal spray system, or in other words the necessary fluidity for forming the thermal spray coating.

The viscosity of the thermal spray slurry is 300 mPa·s or less, or preferably 100 mPa·s or less, or still more preferably 50 mPa·s or less, or most preferably 30 mPa·s or less. The lower the viscosity of the thermal spray slurry, the easier it is to obtain a thermal spray slurry having the fluidity necessary for forming the thermal spray coating.

The viscosity of the thermal spray slurry is the viscosity at room temperature (25°C) as measured with a rotational viscometer. A value measured with a Brookfield rotational viscometer (such as a Rion Co., Ltd. VT-03F Viscotester) for example can be used for this viscosity.

One way of evaluating the fluidity of the thermal spray slurry is by measuring viscosity as discussed above, but viscosity may also be dependent on the density (composition), form and the like of the thermal spray particles in the slurry. Therefore, the composition of the thermal spray slurry disclosed here may be adjusted depending on the composition and form and the like of the thermal spray particles used in thermal spraying in order to further improve the plasma erosion resistance properties of the resulting thermal spray coating.

For example, the thermal spray particles are less liable to sedimentation in the thermal spray slurry and dispersion stability is increased due to increased specific surface area when the average particle diameter of the thermal spray particles is less than about 200 nm. From this standpoint, in one embodiment the average particle diameter of the thermal spray particles is preferably less than 200 nm, or more preferably less than 150 nm. However, if the average particle diameter is too small the suppliability of the thermal spray particles to the thermal spray system is greatly diminished. Viscosity also tends to be greater the smaller the average particle diameter. Therefore, as discussed above, the average particle diameter of the thermal spray particles is preferably at least 1 nm, or more preferably at least 10 nm. In this case, the solids concentration is preferably 50% by mass or less, or more preferably 30% by mass or less, such as 25% by mass or less. The solids concentration is also preferably at least 10% by mass, or more preferably at least 20% by mass.

When the average particle diameter of the thermal spray particles used is 200 nm or more, sedimentation of the thermal spray particles is likely to occur due to gravity in the thermal spray slurry, producing a deposit. For this reason, thermal spray particles with an average particle diameter of 200 nm or more are preferably particles that are easily dispersed in the thermal spray slurry during use. Possible ways of achieving this include (1) increasing the dispersion stability of the thermal spray particles in the thermal spray slurry, and (2) making it easier to re-disperse the deposited thermal spray particles.

### (Dispersant)

The thermal spray slurry also contains a dispersant as necessary. A dispersant here is a compound capable of improving the dispersion stability of the thermal spray particles in the thermal spray slurry. This dispersant may be essentially a compound that acts on the thermal spray particles, or a compound that acts on the dispersion medium. Also, for example it may be a compound that improves the wettability of the surfaces of the thermal spray particles, or a compound that breaks up the thermal spray particles, or a particle that suppresses or inhibits re-agglomeration of the broken up thermal spray particles by acting on the thermal spray particles or dispersion medium.

The dispersant may be selected appropriately from aqueous dispersants and non-aqueous dispersants depending on the dispersion medium. This dispersant may be a polymeric dispersant, a surfactant dispersant (also called a low-molecular-weight dispersant) or an inorganic dispersant, and these may be anionic, cationic or non-ionic. That i, at least one kind of functional group selected from the anionic, cationic and non-ionic groups may be present in the molecular structure of the dispersant.

As examples of polymeric dispersants, aqueous dispersants include dispersants comprising polycarboxylic acid sodium salts, polycarboxylic acid ammonium salts, polycarboxylic acid polymers and other polycarboxylic acid compounds, dispersants comprising polystyrene sulfonic acid sodium salts, polystyrene sulfonic acid ammonium salts, polyisoprene sulfonic acid sodium salts, polyisoprene sulfonic acid ammonium salts, naphthalene sulfonic acid sodium salts, naphthalene sulfonic acid ammonium salts, naphthalene sulfonic acid formalin condensate sodium salts, naphthalene sulfonic acid formalin condensate ammonium salts and other sulfonic acid compounds, and dispersants comprising polyethylene glycol compounds and the like. Examples of non-aqueous dispersants include dispersants comprising polyacrylate salts, polymethacrylate salts, polyacrylamide, polymethacrylamide and other acrylic compounds, dispersants comprising polycarboxylic acid partial alkyl ester compounds having alkyl ester bonds in part of the polycarboxylic acid, dispersants comprising polyether compounds, dispersants comprising polyalkylene polyamine compounds and the like.

As shown by these descriptions, the concept of a "polycarboxylic acid compound" includes these polycarboxylic acid compounds and salts thereof. The same applies to other compounds.

As a matter of convenience, a compound that is classified as either an aqueous dispersant or a non-aqueous dispersant may be a compound that is used as the other kind (non-aqueous or aqueous) of dispersant according to its chemical structure and form of use.

Examples of surfactant dispersants (also called low-molecular-weight dispersants) include aqueous dispersants such as dispersants comprising alkyl sulfonic acid compounds, dispersants comprising quaternary ammonium compounds, and dispersants comprising alkylene oxide compounds and the like. They also include non-aqueous dispersants such as dispersants comprising polyvalent alcohol ester compounds, dispersants comprising alkyl polyamine compounds, and dispersants comprising alkyl imidazoline and other imidazoline compounds and the like.

Examples of inorganic dispersants include aqueous dispersants such as orthophosphates, metaphosphates, polyphosphates, pyrophosphates, tripolyphosphates, hexametaphosphates, organic phosphates and other phosphates, ferric sulfate, ferrous sulfate, ferric chloride, ferrous chloride and other iron salts, aluminum sulfate, aluminum polychloride, sodium aluminate and other aluminum salts, and calcium sulfate, calcium hydroxide, dicalcium phosphate and other calcium salts and the like.

Any one of these dispersants may be used alone, or two or more may be used in combination. In a preferred embodiment, a dispersant comprising an alkyl imidazoline compound and a dispersant comprising a polyacrylate compound are used together in one specific example of the technology disclosed here. The content of the dispersant is not necessary limited because it also depends on the composition (physical properties) of the thermal spray particles, but a typical standard is in the range of 0.01 to 2% by mass given 100% by mass as the mass of the thermal spray particles.

### (Agglomerating agent)

The thermal spray slurry may also contain an agglomerating agent as necessary. An agglomerating agent here is a compound capable of causing the thermal spray particles in the thermal spray slurry to agglomerate. Typically, it is a compound capable of causing flocculation of the thermal spray particles in the thermal spray slurry. Depending on the physical properties of the thermal spray particles, aggregation of deposited thermal spray particles is suppressed and re-dispersion is improved when an agglomerating agent (including re-dispersion improvers, caking preventers and the like) is included in the thermal spray slurry because particle deposition occurs with the agglomerating agent intervening between the thermal spray particles. That is, even when thermal spray particles are deposited it is possible to prevent the individual particles from agglomerating densely and perhaps aggregating (also called caking or hard caking). It is especially desirable to include this agglomerating agent in a thermal spray slurry containing thermal spray particles with an average particle diameter of 200 nm or more, which are liable to sedimentation. That is, the operation of re-dispersion is easier because the deposited thermal particles can be re-dispersed by a simple operation such as shaking. The agglomerating agent may be an aluminum compound, iron compound, phosphate compound or organic compound. Examples of aluminum compounds include aluminum sulfate (also called sulfate band), aluminum chloride, aluminum polychloride (also called PAC, PAC1) and the like. Examples of iron compounds include ferric chloride, polyferric sulfate and the like. Examples phosphate compounds include sodium pyrophosphate and the like. Examples of organic compounds include malic acid, succinic acid, citric acid, maleic acid, maleic anhydride and other organic acids and poly (diallyldimethylammonium chloride), lauryltrimethylammonium chloride, naphthalene sulfonate condensate, sodium triisopropylnaphthalenesulfonate, sodium polystyrenesulfonate, isobutylene maleic acid copolymers, carboxyvinyl copolymers and the like.

### (Viscosity adjuster)

The thermal spray slurry may also contain a viscosity adjuster as necessary. A viscosity adjuster here is a compound that can decrease or increase the viscosity of the thermal spray slurry. By adjusting the viscosity of the thermal spray slurry appropriately, the fluidity of the thermal spray slurry can be prevented from declining even when the content of the thermal spray particles in the thermal spray slurry is relatively high. Examples of compounds that can be used as viscosity adjusters include non-ionic polymers such as polyethylene glycol and other polyethers for example, as well as carboxymethyl cellulose (CMC), hydroxyethyl cellulose (HEC) and other cellulose derivatives and the like.

### (Antifoaming agent)

The thermal spray slurry may also contain an antifoaming agent as necessary. This antifoaming agent is a compound capable of preventing the occurrence of bubbles in the thermal spray slurry during thermal spray slurry manufacture or during thermal spraying, or a compound capable of eliminating bubbles occurring in the thermal spray slurry. Examples of antifoaming agents include silicone oil, silicone emulsion antifoaming agents, polyether antifoaming agents, fatty acid ester antifoaming agents and the like.

### (Preservative, mildew-proofing agent)

The thermal spray slurry may also contain a preservative or mildew-proofing agent as necessary. Examples of preservatives or mildew-proofing agents include isothiazoline compounds, azole compounds, propylene glycol and the like.

When using these dispersants, agglomerating agents, viscosity adjusters, antifoaming agents, preservatives, mildew-proofing agents and other additives, one kind may be used alone, or two or more kinds may be used in combination. These additives may be added to the dispersion medium at the same time as the thermal spray particles when preparing the thermal spray slurry, or at a different time. Although this is not strictly a limitation, when additives are added they are typically added so that the total of all additives is in the range of 0.01 to 10% by mass given 100% by mass as the mass of the thermal spray particles.

The compounds given as examples of the various additives above may function as other additives in addition to their principal additive effects. In other words, a compound of the same type or composition may function as two or more different additives.

The pH of the thermal spray slurry is preferably 6 or more, or more preferably 7 or more, or still more preferably 8 or more. With this pH, it is easy to improve the storage stability of the thermal spray slurry. The pH of the thermal spray slurry is preferably 11 or less, or more preferably 10.5 or less, or still more preferably 10 or less. With this pH, it is easy to improve the dispersion stability of the thermal spray particles in the thermal spray slurry. Various known acids or bases or salts of these may be included as pH adjusters in the thermal spray slurry with the aim of adjusting the pH. Specific examples of pH adjusters preferably include carboxylic acid, organophosphonic acid, organosulfonic acid and other organic acids and phosphoric acid, phosphorous acid, sulfuric acid, nitric acid, hydrochloric acid, boric acid, carbonic acid and other inorganic acids, and tetramethylammonium hydroxide, trimethanolamine, monoethanolamine and other organic bases, potassium hydroxide, sodium hydroxide, ammonia and other inorganic bases and salts of these.

A value measured in accordance with JISZ8802:2011 using a glass electrode pH meter (for example, Horiba Ltd. F-72 benchtop pH meter) with a pH standard solution (such as a phthalate pH standard solution (pH: 4.005/25°C)), neutral phosphate pH standard solution (pH: 6.865/25°C) or carbonate pH standard solution (pH: 10.012/25°C) can be used as the pH of the thermal spray slurry.

The sedimentation rate of the thermal spray particles in the thermal spray slurry can be used as a marker of the degree of dispersion stability of the thermal spray particles in the thermal spray slurry. This sedimentation rate is preferably at least 30 µm/second, or more preferably at least 35 µm/second, or still more preferably at least 40 µm/second. The thermal spray particles in the thermal spray slurry may also maintain a dispersed state without deposition.

For all the thermal spray particles, a value obtained in accordance with centrifugal liquid sedimentation methods (JISZ8823-1:2001) may be used as the sedimentation rate of the thermal spray particles in the thermal spray slurry. A value measured by the centrifugal sedimentation and light transmission method using a particle distribution/dispersion stability analyzer (L.U.M. GmbH, LUMiSizer 610) at a rotation rate of 920 rpm (100G) can be used as the sedimentation rate.

The zeta potential of the thermal spray particles in the thermal spray slurry is preferably 10 mV or more (absolute value), or more preferably 25 mV or more, or still more preferably 40 mV or more. This makes it is easy to improve the dispersion stability of the thermal spray particles in the thermal spray slurry because the thermal spray particles strongly repel one another electrically. There is no particular upper limit to the absolute value of the zeta potential, and a benchmark of about 150 mV is appropriate.

The value of the zeta potential of the thermal spray particles in the thermal spray slurry may be a value obtained by supplying the thermal spray slurry as is (without pretreatment or the like) to a zeta potential measurement device, and measuring the zeta potential while circulating the slurry inside the device. In this Description, values obtained using an ultrasound particle size distribution and zeta potential measurement device (Dispersion Technology Inc. DT-1200) are used as the zeta potential values.

The thermal spray particles may agglomerate in the thermal spray slurry, forming agglomerated particles (called "secondary particles" here). In the thermal spray slurry disclosed here, it is desirable to suppress formation of secondary particles by the thermal spray particles. To determine whether the thermal spray particles have formed secondary particles, the average particle diameter of the thermal spray particles in the slurry can be measured, and that value compared with the average particle diameter of thermal spray particles (in dry powder form) set aside for preparing the thermal spray slurry. For example, if the average particle diameter after slurry preparation is 1.5 times that before slurry preparation, that means that almost all of the thermal spray particles have formed secondary particles. On the other hand, if there is relatively little change and the average particle diameter after slurry preparation is less than 1.5 times that before slurry preparation (preferably 1.3 times or less), this means that formation of secondary particles by the thermal spray particles has been suppressed.

The average particle diameter of the thermal spray particles in the slurry can be measured with various kinds of particle size distribution measurement equipment in the same way as the average particle diameter of the thermal spray particles used as a raw material. In this Description, it can be measured using a laser diffraction/scattering particle size distribution analyzer (Horiba, Ltd. LA-950), and the cumulative 50% particle size (D₅₀) in the volumetric particle size distribution can be adopted. When measuring the average particle diameter, the volumetric 3% particle size (D₃), which is the particle diameter of the particle 3% from the smallest particle size, and the volumetric 97% particle size (D₉₇), which is the particle diameter of the particle 97% from the smallest particle diameter in the volumetric particle size distribution of the thermal spray particles, can also be measured to assess the variation in particle diameter (formation of secondary particles).

To improve the re-dispersibility of the thermal spray particles, it is effective to adjust the particle sizes (degree of variation in particle diameter) of the thermal spray particles in the slurry. It may be particularly effective to increase the percentage of smaller particles. Thus, for example the ratio (D₃/D₅₀) of the cumulative 3% diameter (D₃) to the average particle diameter (D₅₀) of the thermal spray particles in the slurry is preferably at least 0.05, or more preferably at least 0.1, or still more preferably at least 0.15.

When coarse particles (which may be agglomerated particles) are present among the thermal spray particles in the slurry, the plasma erosion resistance of the thermal spray coating may be dramatically reduced around these thermal spray particles. Therefore, the proportion (D₉₇/D₅₀) of the cumulative 97% diameter (D₉₇) to the average particle diameter (D₅₀) of the thermal spray particles in the slurry is preferably 7 or less, or more preferably 6 or less, or especially preferably 5 or less.

This thermal spray slurry may contain thermal spray particles with good dispersibility, or may be prepared as a slurry with good re-dispersibility. Thus, for example this thermal spray slurry can be provided in the form of two or more separate components that are unified during thermal spray (during actual use). For example, the thermal spray particles can be deposited from the thermal spray slurry, and the slurry can be provided as two separate components: a component containing few or no thermal spray particles (typically, a supernatant) and a component containing all or most of the thermal spray particles (typically, the residue after removal of the supernatant). Then during actual use, the separated components can be mixed as necessary, treated by shaking or the like and used as the aforementioned thermal spray slurry. Alternatively, the thermal spray slurry can be provided with the components other than the dispersion medium contained in one or more packages separately from the dispersion medium. In this case, the thermal spray slurry can be prepared for actual use by mixing the dispersion medium with the components other than the dispersion medium. It is thus possible to easily prepare a thermal spray slurry immediately before thermal spraying. This is also advantageous for facilitating storage until use in thermal spraying.

### (Method for forming thermal spray coating)

### (Substrate)

In the method for forming a thermal spray coating disclosed here, the substrate on which the thermal spray coating is formed by thermal spraying is not particularly limited. For example, substrates of various materials can be used as long as they consist of materials having the desired resistance with respect to thermal spraying. Examples of such materials include various metals, alloys and the like. Specific examples include aluminum, aluminum alloys, iron, steel, copper, copper alloys, nickel, nickel alloys, gold, silver, bismuth, manganese, zinc, zinc alloys and the like. Of these, examples of widely used metal materials include steels such as various kinds of SUS (so-called stainless steel) having a relatively high thermal expansion coefficient, Inconel and other heat-resistant alloys, Invar, Kovar and other low-expansion alloys, hastelloy and other corrosion-resistant alloys, and aluminum alloys including 1000 series to 7000 series aluminum alloys and the like, which are useful as light structural materials.

### (Method for forming coating)

The thermal spray slurry disclosed here can be supplied to a thermal spray system using a known thermal spray method, and used as a thermal spray material for forming a thermal spray coating. Examples of thermal spray methods suitable for thermally spraying the thermal spray slurry include plasma spraying, high-velocity flame spraying and other thermal spray methods.

Plasma spraying is a thermal spray method that uses a plasma flame as the thermal spray heat source to soften or melt the thermal spray material. An arc is generated between electrodes, a working gas is converted to plasma by the arc, and the resulting plasma flow is discharged as a high-temperature, high-speed plasma jet from a nozzle. Plasma spraying methods here include coating methods in general in which a thermal spray material is supplied to such a plasma jet, heated, accelerated and deposited on a substrate to obtain a thermal spray coating. The mode of plasma spraying may be atmospheric plasma spraying (APS) conducted in atmosphere, low-pressure plasma spraying (LPS) conducted at a pressure lower than atmospheric pressure, or high-pressure plasma spraying conducted in a container at a pressure higher than atmospheric pressure or the like. With this plasma spraying, for example it is possible to melt and accelerate a thermal spray material by means of a 5000°C to 10000°C plasma jet, and deposit the thermal spray particles by propelling them onto a substrate at a speed of about 300 m/s to 600 m/s.

Possible high-velocity flame spraying methods include high velocity oxy-fuel coating (HVOF), warm spraying, and high velocity air-fuel coating (HVAF) for example.

HVOF thermal spraying is a flame spraying method in which the heat source for thermal spraying is a combustion flame obtained by mixing a fuel with oxygen and combusting it at high pressure. The pressure inside a combustion chamber is increased to discharge a high speed (possibly ultrasonic), high-temperature gas flow from a nozzle while maintaining a continuous combustion flame. HVOF thermal spraying encompasses coating methods in general in which the thermal spray material is injected into this gas flow, heated, and accelerated and deposited onto a substrate to obtain a thermal spray coating. With HVOF thermal spraying, because the thermal spray slurry is supplied to an ultrasonic jet of a 2000°C to 3000°C combustion flame, it is possible to remove the dispersion medium from the slurry (here and below, by either combustion or evaporation) while softening or melting the thermal spray particles and depositing them by propelling them against a substrate at a high speed of 500 m/s to 1000 m/s. The fuel used in high-velocity flame spraying may be a hydrocarbon gas fuel such acetylene, ethylene, propane or propylene, or a liquid fuel such as kerosene or ethanol. Preferably the higher the melting point of the thermal spray material, the higher the temperature of the ultrasonic combustion flame, and a gas fuel is desirable from this perspective.

It is also possible to use a thermal spray method called warm spraying, which is a modification of the HVOF thermal spray method. In warm spraying, typically a cool gas consisting of nitrogen or the like at roughly room temperature is mixed with the combustion flame in the HVOF method to lower the temperature of the combustion flame for example, and thermal spraying is performed in this state to form a thermal spray coating. The thermal spray material need not be in a completely melted state, and for example the material may be sprayed with part in a melted state or in a softened state below the melting point. With this warm spraying method, in one example the thermal spray slurry can be supplied to an ultrasound jet of a 1000°C to 2000°C combustion flame, to thereby remove the dispersion medium from the slurry (here and below, by either combustion or evaporation) while softening or melting the thermal spray particles and depositing them by propelling them against a substrate at a high speed of 500 m/s to 1000 m/s.

HVAF thermal spraying is a modification of HVOF in which air is used instead of oxygen as the supporting gas. With HVAF, the thermal spray temperature can be lower than in HVOF. As one example, the thermal spray slurry can be supplied to an ultrasound jet of a 1600°C to 2000°C combustion flame, to thereby remove the dispersion medium from the slurry (here and below, by either combustion or evaporation) while softening or melting the thermal spray particles and depositing them by propelling them against a substrate at a high speed of 500 m/s to 1000 m/s.

In the present disclosure here, spraying the thermal spray slurry by high-velocity flame spraying or plasma spraying is desirable because it allows the efficient formation of a dense thermal spray coating with superior plasma erosion resistance. Although this is not a particular limitation, high-velocity flame spraying is preferred in cases in which the thermal spray slurry contains water as a dispersion medium. Plasma spraying is preferred in cases in which the dispersion medium contained in the thermal spray slurry is an organic solvent.

The rate at which the thermal spray slurry is supplied to the thermal spray system is not particularly limited, but is preferably 10 mL/min to 200 mL/min. A supply rate of the thermal spray slurry of at least 10 mL/min is desirable for achieving a turbulent state of the slurry flowing through the thermal spray slurry supply unit (slurry supply tube for example), to thereby increase the extrusion force of the slurry and suppress sedimentation of the thermal spray particles. From this standpoint, the flow rate during supply of the thermal spray slurry is preferably at least 20 mL/min, or more preferably at least 30 mL/min. A too rapid supply rate is undesirable however because of the risk that an excessive amount of slurry will be available for thermal spraying in the thermal spray system. From this perspective, the flow rate during supply of the thermal spray slurry can be 200 mL/min or less, or preferably 150 mL/min or less, such as 100 mL/min or less.

Supply of the thermal spray slurry to the thermal spray system is preferably by axial feed, or in other words the thermal spray slurry is preferably supplied in the same direction as the axis of the jet flow generated in the thermal spray system. For example, when a thermal spray slurry in the slurry state of the present disclosure is supplied to a thermal spray system by axial feed, the thermal spray material in the thermal spray slurry is less likely to adhere to the inside of the thermal spray system because the thermal spray slurry has good fluidity, and a dense thermal spray coating can be formed efficiently as a result.

When the thermal spray slurry is supplied to the thermal spray system with an ordinary feeder, on the other hand, stable feed may be more difficult due to periodic fluctuations in the amount supplied. When irregularities in the amount of supplied thermal spray slurry occur due to such periodic fluctuations in the supply, it becomes more difficult to uniformly heat the thermal spray material inside the thermal spray system, and an irregular thermal spray coating may be formed as a result. Therefore, to achieve a stable feed of the thermal spray slurry to the thermal spray system, a two-stroke system or in other words two feeders may be used, in such a way that the fluctuation cycles of the amounts of slurry supplied from these two feeds are in reverse phases to one another. Specifically, for example the supply system can be adjusted to achieve a cycle in which the supplied amount from one feeder decreases when the supplied amount from the other feeder increases. When the thermal spray slurry of the present disclosure is supplied to the thermal spray system by a 2-stroke system, a dense thermal spray coating can be formed efficiently because the fluidity of the thermal spray slurry is good.

As a means of stably supplying the thermal spray material in slurry form to the thermal spray system, the slurry sent from the feeder can be accumulated in a holding tank provided immediately before the thermal spray system, and the slurry can then be either supplied to the thermal spray system by natural gravity from the holding tank, or forcibly supplied by a pump or the like. Supplying the slurry forcibly by a pump, etc. is desirable because the thermal spray material in the slurry is less likely to adhere to the inside of the tube even if the tank is connected by a tube to the thermal spray system. A means for agitating the thermal spray slurry in the tank can be provided in order to equalize the distribution of the components of the thermal spray slurry in the tank.

The supply of the thermal spray slurry to the thermal spray system is preferably via an electrically conductive tube made of metal for example. Using a conductive tube is desirable because it serves to suppress generation of static electricity and inhibit fluctuations in the supplied amount of the thermal spray slurry. The inner surface of the conductive tube preferably has a surface roughness Ra of 0.2 µm or less.

The thermal spray distance is preferably set so that the distance to the substrate from the nozzle tip of the thermal spray system is 30 mm or more. If the thermal spray distance is too short, it is not preferable because then it may not be possible to ensure enough time to remove the dispersion medium from the thermal spray slurry or to soften or melt the thermal spray particles, and since the thermal spray heat source is close to the substrate, there is a risk that the substrate itself may be transformed or deformed. The thermal spray distance is also preferably about 200 mm or less (preferably 150 mm or less, such as 100 mm or less). With this distance, the adequately heated thermal spray particles can reach the substrate at the designated temperature, resulting in a denser thermal spray coating. During thermal spraying, the substrate is preferably cooled from the surface opposite the thermally sprayed surface. This cooling can be water cooling or cooling with a suitable cooling medium.

### (Thermal spray coating)

A thermal spray coating comprising a compound with an identical composition to the thermal spray particles and/or a decomposition product thereof is formed by the techniques disclosed above. That is, this thermal spray coating may comprise a compound containing yttrium (Y) and a halogen element (X), or a compound (Y-O-X) comprising yttrium, oxygen and a halogen element as constituent components. Thus, as explained above with respect to the thermal spray particles, this thermal spray coating can have superior plasma erosion resistance against halogen plasma. This thermal spray coating may be formed so that the percentage of the main peak strength of yttrium oxide (Y₂O₃) based on X-ray diffraction is 90% or less (preferably 80% or less, more preferably 70% or less, especially preferably 60% or less, such as 40% or less). Moreover, this thermal spray coating may be formed so that the total percentage of the main peak strengths of yttrium oxyhalides based on XRD is 10% or more (preferably 20% or more, more preferably 30% or more, especially preferably 40% or more, such as 60% or more).

As discussed above, this thermal spray coating can be formed using a thermal spray slurry with good suppliability. As a result, the thermal spray particles maintain a good dispersed state and fluid state in the thermal spray slurry, and are supplied stably to the thermal spray system to form a uniform thermal spray coating. Moreover, the thermal spray particles are supplied efficiently near the center of the heat source without being repelled by the flame or jet, and are thus thoroughly softened or melted. As a result, the softened or melted thermal spray particles adhere densely and tightly to each other and to the substrate. A uniform thermal spray coating with good adhesive properties is formed as a result.

Some examples of the present disclosure are explained below, but the present disclosure is not limited by these examples.

### (Examples)

Thermal spray particles were mixed with a dispersion medium, and a dispersant, a viscosity adjuster or an agglomeration agent was further mixed in as necessary to prepare the thermal spray slurries of Samples 1 to 38, wherein Samples 1 to 12 act as Reference Samples. The details of each thermal spray slurry are shown in Table 1.

The type of dispersion medium used in each thermal spray slurry is shown in the "Dispersion medium" column of Table 1. In this column, "EtOH" indicates ethanol, "iso-PrOH" indicates isopropyl alcohol and "n-PrOH" indicates normal propyl alcohol. When two or more dispersion media are shown in this column, it means that this is a mixed dispersion medium obtained by mixing the respective media in the following proportions. The mixing ratio of water and EtOH is 50:50 by mass, while the mixing ratio of EtOH, iso-PrOH and n-PrOH is 85:5:10 by mass in that order.

The composition of the thermal spray particles used in each thermal spray slurry is shown in the "Thermal spray particles" column of Table 1. When two or more compositions are shown, it means that these are mixed particles obtained by mixing thermal spray particles of each composition in the described proportions (% by mass).

The average particle diameter of the thermal spray particles used in each thermal spray slurry is shown in the "Average particle diameter" column of Table 1. The average particle diameter of the thermal spray particles with an average particle diameter of 1 µm or more is a value measured with a laser diffraction/scattering particle size distribution analyzer, while the equivalent specific surface diameter was used for the particles with an average particle diameter of less than 1 µm.

The content of the thermal spray particles in each thermal spray slurry is shown in the "Content of thermal spray particles" column of Table 1.

The types of additives used in each thermal spray slurry are shown in the corresponding "Dispersant", "Viscosity adjuster", "Agglomerating agent", "Antifoaming agent" and "Mildew-proofing agent" columns of Table 1.

As the dispersant, a non-ionic surfactant dispersant (DAIICHI KOGYO SEIYAKU CO., LTD. NOIGEN XL-400) was used for samples using an aqueous dispersion medium containing water as the dispersion medium, while a special-grade polycarboxylic acid surfactant dispersant (Kao Corporation. HOMOGENOL L-18) was used for samples using a non-aqueous dispersion medium. For the viscosity adjuster, an anionic special-grade denatured polyvinyl alcohol (PVOH) viscosity adjuster containing sulfonic acid groups (Nippon Synthetic Chemical Industry Co., Ltd. Gohsenol L-3266) was used. Isobutylene-maleic acid copolymer or aluminum sulfate was used as the agglomerating agent. A polyether-type nonionic surfactant was used as the antifoaming agent. Hydrogen peroxide water, sodium hypochlorite, or the mildew-proofing agent shown as Mixture A was used as the mildew-proofing agent. "Mixture A" in the mildew-proofing agent column represents a blend of 2-bromo-2-nitropropane-1,3-diol and a mixed aqueous solution of 5-chloro-2-methyl-4-isothiazoline-3-one, 2-methyl-4-isothiazoline-3-one and a magnesium salt. A hyphen (-) in any of these columns means that the corresponding additive is not used.

When a dispersant is used, it is preferably used in an amount yielding a content of 2% by mass in the thermal spray slurry. When a viscosity adjuster is used, it is preferably used in an amount yielding a content of 2% by mass in the thermal spray slurry. When an agglomerating agent is used, it is preferably used in an amount yielding content of 2% by mass in the thermal spray slurry. When an antifoaming agent is used, it is preferably used in an amount yielding a content of 0.2% by mass in the thermal spray slurry. When a mildew-proofing agent is used, it is preferably used in an amount yielding a content (total content) of 0.2% by mass of the mildew-proofing agent in the thermal spray slurry.

### [Table 1a]

**Table 1a**

| Sample | | | | Thermal spray slurry | | | | | |
|---|---|---|---|---|---|---|---|---|---|
| | Dispersion medium | Thermal spray particles | Average particle diameter (µm) | Content of thermal spray particles (% by mass) | Dispersant | Viscosity adjuster | Agglomerating agent | Antifoaming agent | Mildew-proofing agent |
| 1 | Water | YF3 | 0.7 | 5 | Non-ionic surfactant | - | - | - | - |
| 2 | Water | YF3 | 0.7 | 10 | Non-ionic surfactant | - | - | - | - |
| 3 | Water | YF3 | 0.7 | 30 | Non-ionic surfactant | - | - | Polyether | Hydrogen peroxide water |
| 4 | Water | YF3 | 0.7 | 50 | Non-ionic surfactant | - | - | - | - |
| 5 | Water | YF3 | 0.7 | 80 | Non-ionic surfactant | - | - | - | - |
| 6 | Water | YF3 | 0.7 | 90 | Non-ionic surfactant | - | - | - | Sodium hypochlorite |
| 7 | EtOH | YF3 | 0.7 | 10 | Polycarboxylic acid | - | - | Polyether | - |
| 8 | EtOH | YF3 | 0.7 | 50 | Polycarboxylic acid | - | - | - | - |
| 9 | EtOH | YF3 | 0.7 | 80 | Polycarboxylic acid | - | - | - | - |
| 10 | Water | YF3 | 1.2 | 40 | Non-ionic surfactant | PVOH | - | - | - |
| 11 | Water EtOH | YF3 | 1.2 | 40 | Non-ionic surfactant | PVOH | - | - | - |
| 12 | Water | YF3 | 4.4 | 40 | Non-ionic surfactant | PVOH | - | - | - |
| 13 | Water | Y5O4F7 | 0.012 | 25 | Non-ionic surfactant | - | Isobutylene-maleic acid copolymer | - | Mixture A |

### [Table 1b]

**Table 1b**

| Sample | | | | Thermal spray slurry | | | | | |
|---|---|---|---|---|---|---|---|---|---|
| | Dispersion medium | Thermal spray particles | Average particle diameter (µm) | Content of thermal spray particles (% by mass) | Dispersant | Viscosity adjuster | Agglomerating agent | Antifoaming agent | Mildew-proofing agent |
| 14 | EtOH | Y5O4F7 | 0.012 | 25 | Polycarboxylic acid | PVOH | - | Polyether | Sodium hypochlorite |
| 15 | EtOH | Y5O4F7 | 0.012 | 20 | Polycarboxylic acid | PVOH | - | - | - |
| 16 | Water | Y5O4F7 | 1.2 | 40 | Non-ionic surfactant | - | Isobutylene-maleic acid copolymer | - | - |
| 17 | Water | Y5O4F7 | 1.2 | 40 | Non-ionic surfactant | PVOH | - | - | Sodium hypochlorite |
| 18 | Water EtOH | Y5O4F7 | 1.2 | 40 | Non-ionic surfactant | PVOH | - | - | - |
| 19 | Water | Y5O4F7 | 1.2 | 40 | Non-ionic surfactant | - | Aluminum sulfate | - | - |
| 20 | Water | Y5O4F7 | 1.2 | 40 | Non-ionic surfactant | - | - | - | - |
| 21 | EtOH | Y5O4F7 | 1.2 | 70 | Polycarboxylic acid | - | Isobutylene-maleic acid copolymer | - | Mixture A |
| 22 | EtOH | Y5O4F7 | 1.2 | 70 | Polycarboxylic acid | PVOH | Isobutylene-maleic acid copolymer | - | Mixture A |
| 23 | Water | Y5O4F7 | 2.5 | 30 | Non-ionic surfactant | - | - | - | - |
| 24 | EtOH | Y5O4F7 | 2.5 | 30 | Polycarboxylic acid | - | - | - | - |
| 25 | Water | Y5O4F7 | 4.4 | 40 | Non-ionic surfactant | PVOH | - | Polyether | - |
| 26 | Water | YOF | 0.012 | 5 | Non-ionic surfactant | - | Isobutylene-maleic acid copolymer | - | - |

### [Table 1c]

**Table 1c**

| Sample | | | | Thermal spray slurry | | | | | |
|---|---|---|---|---|---|---|---|---|---|
| | Dispersion medium | Thermal spray particles | Average particle diameter (µm) | Content of thermal spray particles (% by mass) | Dispersant | Viscosity adjuster | Agglomerating agent | Antifoaming agent | Mildew-proofing agent |
| 27 | Water | YOF | 1.2 | 70 | Non-ionic surfactant | - | - | - | - |
| 28 | Water | YOF | 1.2 | 90 | Non-ionic surfactant | - | - | - | - |
| 29 | Water | YOF | 1.2 | 40 | Non-ionic surfactant | PVOH | - | - | - |
| 30 | Water EtOH | YOF | 1.2 | 40 | Non-ionic surfactant | PVOH | - | Polyether | - |
| 31 | EtOH | YOF | 1.2 | 70 | Polycarboxylic acid | PVOH | Isobutylene-maleic acid copolymer | - | - |
| 32 | Water | YOF | 1.3 | 30 | Non-ionic surfactant | - | - | - | - |
| 33 | EtOH | YOF | 1.3 | 30 | Polycarboxylic acid | - | - | Polyether | Sodium hypochlorite |
| 34 | Water | YOF | 4.4 | 40 | Non-ionic surfactant | PVOH | - | - | - |
| 35 | Water | 10% YF3 90% YOF | 3.1 | 30 | Non-ionic surfactant | - | - | - | - |
| 36 | EtOH iso-PrOH n-PrOH | 22% YF3 78% YOF | 3.8 | 30 | Polycarboxylic acid | - | - | - | Mixture A |
| 37 | Water | Y7O6F9 | 2.9 | 30 | Non-ionic surfactant | - | - | - | - |
| 38 | EtOH iso-PrOH n-PrOH | Y6O5F8 | 2.5 | 30 | Polycarboxylic acid | - | - | - | Sodium hypochlorite |

Next, the physical characteristics of the thermal spray slurries of Samples 1 to 38 were investigated, with the results shown in Table 2.

The "Slurrying" column in Table 2 shows the results of an evaluation to determine whether or not a thermal spray slurry was successfully prepared. An "O" in this column indicates that stirring was achieved at 400 rpm using a common rotary vane stirring apparatus with thermal spray particles mixed into a specific amount of dispersion medium, while an "X" indicates that stirring was not achieved at 400 rpm.

The "pH", "viscosity", "sedimentation rate", "zeta potential", "D₃", "D₅₀" and "D₉₇" columns in Table 2 show the measurement values for the various physical properties of the thermal spray slurry or the thermal spray particles in the slurry as measured by the methods described above. The "Specific gravity" column in Table 2 shows the measurement results for specific gravity of the thermal spray slurry as measured according to the "Methods of measuring density and specific gravity using pycnometers" given by 6 of JISZ8804:2012. A pycnometer that is in accordance with JISR3503:2007 was used. A hyphen (-) in each column means that the measurement was not performed. For thermal spray slurries in which the average particle diameter of the thermal spray particles was 0.012 µm, the sedimentation rate was not evaluated because no sedimentation of thermal spray particles occurred.

### [Table 2a]

**Table 2a**

| Sample | | | | Physical characteristics of slurry | | | | | | | |
|---|---|---|---|---|---|---|---|---|---|---|---|
| | Slurrying | pH | Viscosity (mPa·s) | Sedimentation rate (µm/sec) | Zeta potential (mV) | D₃ (µm) | D₅₀ (µm) | D97 (µm) | D₃/D₅₀ | D₉₇/D50 | Specific gravity (g/cm³) |
| 1 | O | 7.5 | 1.4 | 39 | -119 | 0.2 | 0.9 | 2.6 | 0.24 | 3.0 | 1.04 |
| 2 | O | 7.0 | 1.4 | 38 | -143 | 0.2 | 0.8 | 2.4 | 0.25 | 3.0 | 1.09 |
| 3 | O | 7.3 | 2.3 | 33 | -111 | 0.2 | 0.7 | 2.4 | 0.26 | 3.3 | 1.33 |
| 4 | O | 7.4 | 10 | 31 | -92 | 0.2 | 0.9 | 2.6 | 0.25 | 2.8 | 1.63 |
| 5 | X | - | - | - | - | - | - | - | - | - | - |
| 6 | X | - | - | - | - | - | - | - | - | - | - |
| 7 | O | 6.9 | 2.6 | - | 86 | 0.3 | 0.8 | 2.9 | 0.35 | 3.7 | 0.88 |
| 8 | O | 8.0 | 30 | - | 85 | 0.3 | 0.9 | 2.9 | 0.31 | 3.2 | 1.43 |
| 9 | X | - | - | - | - | - | - | - | - | - | - |
| 10 | O | 7.8 | 21 | 43 | -108 | | - | - | - | - | 1.38 |
| 11 | O | 8.1 | 27 | 51 | 45 | 0.3 | 1.3 | 3.0 | 0.23 | 2.3 | 1.12 |
| 12 | O | 7.9 | 17 | 55 | -168 | 0.2 | 4.6 | 8.5 | 0.04 | 1.8 | 1.38 |
| 13 | O | 10.9 | 290 | - | -74 | - | - | - | - | - | 1.25 |
| 14 | O | 9.8 | 284 | - | -38 | - | - | - | - | - | 1.06 |
| 15 | O | 9.1 | 262 | - | -36 | - | - | - | - | - | 1.01 |
| 16 | O | 8.8 | 25 | 54 | -74 | 0.3 | 1.2 | 3.8 | 0.25 | 3.2 | 1.38 |
| 17 | O | 8.7 | 22 | 36 | -75 | 0.3 | 1.6 | 4.6 | 0.19 | 2.9 | 1.39 |
| 18 | O | 7.8 | 27 | 37 | -44 | 0.2 | 1.3 | 4.5 | 0.15 | 3.5 | 1.24 |
| 19 | O | 8.5 | 17 | 73 | -63 | 0.2 | 1.5 | 5.2 | 0.13 | 3.5 | 1.36 |

### [Table 2b]

**Table 2b**

| Sample | | | | Physical characteristics of slurry | | | | | | | |
|---|---|---|---|---|---|---|---|---|---|---|---|
| | Slurrying | pH | Viscosity (mPa·s) | Sedimentation rate (µm/sec) | Zeta potential (mV) | D₃ (µm) | D₅₀ (µm) | D₉₇ (µm) | D₃/D₅₀ | D₉₇/D₅₀ | Specific gravity (g/cm³) |
| 20 | O | 8.8 | 17 | 46 | -67 | 0.2 | 1.2 | 3.9 | 0.17 | 3.3 | 1.34 |
| 21 | O | 9.2 | 65 | 62 | -24 | 0.3 | 1.1 | 4.2 | 0.27 | 3.8 | 1.56 |
| 22 | O | 9.1 | 61 | 71 | -26 | 0.3 | 1.3 | 4.6 | 0.23 | 3.5 | 1.57 |
| 23 | O | 8.4 | 1.4 | 56 | -70 | 0.3 | 2.1 | 8.8 | 0.14 | 4.2 | 1.31 |
| 24 | O | 8.0 | 4 | 64 | -27 | 0.4 | 2.5 | 11.2 | 0.14 | 4.5 | 1.11 |
| 25 | O | 9.4 | 16 | 93 | -66 | 0.6 | 4.2 | 7.6 | 0.14 | 1.8 | 1.37 |
| 26 | O | 11.1 | 35 | - | -4 | - | - | - | - | - | 1.06 |
| 27 | O | 9.9 | 885 | 24 | -9 | 0.2 | 1.5 | 4.2 | 0.13 | 2.8 | 1.69 |
| 28 | X | - | - | - | - | - | - | - | - | - | - |
| 29 | O | 8.7 | 22 | 37 | -116.0 | 0.3 | 1.3 | 5.6 | 0.23 | 4.3 | 1.38 |
| 30 | O | 8.7 | 23 | 30 | -36.0 | 0.3 | 1.6 | 9.3 | 0.19 | 5.8 | 1.19 |
| 31 | O | 10.2 | 61 | 51 | 46.0 | 0.2 | 1.1 | 7.4 | 0.18 | 6.7 | 1.19 |
| 32 | O | 8.9 | 1.7 | 56 | -128 | 0.3 | 1.3 | 3.6 | 0.22 | 2.7 | 1.33 |
| 33 | O | 9.4 | 5.5 | 42 | 28 | 0.3 | 1.4 | 3.6 | 0.24 | 2.7 | 1.12 |
| 34 | O | 8.4 | 17 | 34 | -58.0 | 0.4 | 5.2 | 10.3 | 0.08 | 2.0 | 1.39 |
| 35 | O | 8.6 | 4.3 | 68 | -134 | 0.4 | 3.5 | 8.7 | 0.11 | 2.5 | 1.41 |
| 36 | O | 9.1 | 6.8 | 61 | 43 | 0.5 | 3.6 | 8.9 | 0.14 | 2.5 | 1.15 |
| 37 | O | 8.7 | 7.2 | 63 | -125 | 0.3 | 2.6 | 7.6 | 0.12 | 2.9 | 1.4 |
| 38 | O | 8.8 | 4.5 | 74 | 51 | 0.3 | 2.9 | 9.4 | 0.10 | 3.2 | 1.13 |

Next, thermal spraying was performed with the thermal spray slurries of Samples 1 to 38, and the thermal spray properties and characteristics of the thermal spray coatings formed by thermal spraying were investigated with the results shown in Table 4.

Some of the results from Table 1 are shown in the "Thermal spray slurry" column of Table 4.

In the "Coating properties" column of Table 4, the "HVOF" column shows the results of an evaluation to determine whether or not a thermal spray coating could be obtained by HVOF spraying of each thermal spray slurry under the following conditions. An "O" (good) in this column indicates that the thickness of the thermal spray coating formed in each pass was 2 µm or more, while an "X" (poor) indicates that the thickness was less than 2 µm or the thermal spray slurry could not be supplied, and "-" indicates that this was not tested.

### <HVOF thermal spray conditions>

| | |
|---|---|
| Thermal spray system: | GTV GmbH "Topgun" |
| Slurry supply unit: | GTV GmbH |
| Acetylene gas flow: | 75 L/min |
| Oxygen gas flow: | 230 L/min |
| Spray distance: | 90 mm |
| Sprayer movement speed: | 100 m/min |
| Amount of slurry supplied: | 4.5 L/hour |

In the "Coating properties" column of Table 4, the "APS" column shows the results of an evaluation to determine whether or not a thermal spray coating could be obtained by APS spraying of each thermal spray slurry under the following conditions. A "O" (good) in this column indicates that the thickness of the thermal spray coating formed in one pass was 0.5 µm or more, while a "X" (poor) indicates that the thickness was less than 0.5 µm or the thermal spray slurry could not be supplied, and "-" indicates that this was not tested. "One pass" means one spray operation by the thermal spray system (spray gun) in the direction of operation (scanning direction) of the thermal spray system or the thermal spray target (substrate).

### <APS thermal spray conditions>

| | |
|---|---|
| Thermal spray system: | Northwest Mettech Corp. "Axial III" |
| Slurry supply unit: | Northwest Mettech Corp. "M650" |
| Ar gas flow: | 81 L/min |
| Nitrogen gas flow: | 81 L/min |
| Hydrogen gas flow: | 18 L/min |
| Plasma power: | 88 kW |
| Spray distance: | 50 mm |
| Sprayer movement speed: | 240 m/min |
| Amount of slurry supplied: | 3 L/hour |

For both HVOF spraying and APS spraying, a plate (70 mm x 50 mm x 2.3 mm) of aluminum alloy (A16061) was prepared as the substrate for thermal spraying, and was blast treated with a brown alumina abrasive (A#40) before use.

The results in the "Relative X-ray diffraction peak strength of coating" column of Table 4 were calculated based on the results of X-ray diffraction (XRD) analysis of the thermal spray coatings formed from each thermal spray slurry, and represent the main peak strength of each detected crystal phase as a percentage of the main peak strength of all detected crystal phases. For the samples that formed thermal spray coatings by both HVOF spraying and APS spraying, the analysis results for the thermal spray coating formed by APS spraying are shown. The relative strength of the main peak for the yttrium oxide phase is shown in the "Y2O3" column, for the yttrium fluoride phase in the "YF3" column , for the phase of the yttrium oxyfluoride represented by the chemical composition YOF (Y₁O₁F₁) in the "YOF" column, for the phase of the yttrium oxyfluoride represented by the chemical composition Y₇O₈F₉ in the "Y7O8F9" column, for the phase of the yttrium oxyfluoride represented by the chemical composition Y₆O₅F₈ in the "Y6O5F8" column, and for the phase of the yttrium oxyfluoride represented by the chemical composition Y₅O₄F₇ in the "Y5O4F7" column.

In the (F/Y) and (O/Y) columns under "Relative X-ray diffraction peak strength of coating" in Table 4, the ratio of F element to Y element (F/Y) and the ratio of O element to Y element (O/Y) in the yttrium oxyfluorides of the four compositions shown above were calculated and given as weighted sums.

The X-ray diffraction analysis was performed with an X-ray diffraction analyzer (Rigaku, Ultima IV) using CuKα as the X-ray source (voltage 20 kV, current 10 mA) with a scanning range of 2θ = 10°~70°, a scanning speed of 10°/min, a sampling width of 0.01°, a 1° divergence slit, a 10 mm divergence vertical limit slit, a 1/6° scattering slit, a 0.15 mm receiving slit and an offset angle of 0°.

For reference, the main peak of each crystal phase was detected near 29.157° for Y₂O₃, near 27.881° for YF₃, near 28.064° for YOF, and near 28.114° for Y₅O₄F₇.

The "F plasma" column under "Plasma erosion resistance" in Table 4 shows the results of an evaluation of plasma erosion resistance based on the reduction in the thickness of the thermal spray coating in a plasma exposure test using F plasma.

The "Cl plasma" column under "Plasma erosion resistance" in Table 4 shows the results of an evaluation of plasma erosion resistance based on the reduction in the thickness of the thermal spray coating in a plasma exposure test using Cl plasma.

### <Plasma exposure test>

Plasma exposure testing of the thermal spray coatings was performed as follows. First, a 20 mm x 20 mm thermal spray coating was formed under the spraying conditions described above on a substrate, the surface of the thermal spray coating was mirror polished to a coating thickness of 2 mm, the four corners of the thermal spray coating were masked with masking tape to prepare a test piece. For samples that formed thermal spray coatings by both HVOF spraying and APS spraying, the thermal spray coating formed by APS spraying was tested. These test pieces were then placed on a silicon wafer with a diameter of 30 mm set on a stage in the chamber of a semiconductor device manufacturing unit (ULVAC, Inc. NLD-800). Next, F plasma or Cl plasma was generated by repeating a specific cycle under the conditions shown in Table 3 below to plasma etch the centers of the silicon wafer and thermal spray coatings. As shown in Table 3 below, the F plasma was generated using a mixed gas of CF₄ and O₂ (volume ratio: 53.2/5) as the etching gas. The Cl plasma was generated using a mixed gas of CCl₄ and O₂ (volume ratio 53.2/5) as the etching gas. The exposure time to each plasma was 0.9 hours including intervals (cooling cycle time). The amount of etching (corrosion) of the thermal spray coating by each plasma was then measured as the amount of decrease in thickness. The results are shown in Table 4 as relative values given 1 as the value for Sample 1 (benchmark). Specifically, a value calculated by the formula: (decrease per unit time in thickness of thermal spray coating of Sample 1 [µm/hr]) / (decrease per unit time in thickness of thermal spray coating of each sample [µm/hr]) was given as the plasma erosion resistance.

The decrease in the thickness of the thermal spray coating was determined by measuring the level difference between the masked part and the plasma eroded surface with a surface roughness tester (Mitsutoyo Corporation. SV-3000CNC).

### [Table 3]

**Table 3**

| Plasma generation conditions | F Plasma | Cl plasma |
|---|---|---|
| Etching gas composition | CF₄/O₂ | CCl₄/O₂ |
| Gas flow rate (sccm) | 53.2/5 | 53.2/5 |
| Internal chamber pressure (Pa) | 1 | 1 |
| Plasma generating power (Top) (W) | 1500 | 1500 |
| Plasma generating power (Bottom) (W) | 400 | 400 |
| Bias area (mm^{ϕ}) | 100(4") | 100(4") |
| Power density (W/cm²) | 5.1 | 5.1 |
| Exposure time (hrs) | 0.9 | 0.9 |
| Exposure/cooling cycle (min) | 0.5/1.5 | 0.5/1.5 |

### [Table 4a]

**Table 4a**

| Sample | Thermal spray slurry (from Tables 1a, 1b) | | | | Coating properties | | Relative X-ray diffraction peak strength of coating | | | | | | | | Plasma erosion resistance | |
|---|---|---|---|---|---|---|---|---|---|---|---|---|---|---|---|---|
| | Dispersion medium | Type of particles | Average particle di. (µm) | Content of particles (% by mass) | HVOF spray | APS spray | Y2O3 | YF3 | YOF | Y7O6F9 | Y6O5F8 | Y5O4F7 | Y-O-F (F/Y) | Y-O-F (O/Y) | F plasma | Cl plasma |
| 1 | Water | YF3 | 0.7 | 5 | X | O | 95 | 3 | 2 | 0 | 0 | 0 | 2 | 2 | 1 | 1 |
| 2 | Water | YF3 | 0.7 | 10 | X | O | 70 | 15 | 15 | 0 | 0 | 0 | 15 | 15 | 1.2 | 1.1 |
| 3 | Water | YF3 | 0.7 | 30 | X | O | 60 | 25 | 15 | 0 | 0 | 0 | 15 | 15 | 1.2 | 1.1 |
| 4 | Water | YF3 | 0.7 | 50 | X | O | 50 | 40 | 10 | 0 | 0 | 0 | 10 | 10 | 1.3 | 1.1 |
| 5 | Water | YF3 | 0.7 | 80 | - | - | - | - | - | - | - | - | - | - | - | - |
| 6 | Water | YF3 | 0.7 | 90 | - | - | - | - | - | - | - | - | - | - | - | - |
| 7 | EtOH | YF3 | 0.7 | 10 | O | O | 75 | 10 | 15 | 0 | 0 | 0 | 15 | 15 | 1.1 | 1.1 |
| 8 | EtOH | YF3 | 0.7 | 50 | O | O | 55 | 35 | 10 | 0 | 0 | 0 | 10 | 10 | 1.2 | 1.1 |
| 9 | EtOH | YF3 | 0.7 | 80 | - | - | - | - | - | - | - | - | - | - | - | - |
| 10 | Water | YF3 | 1.2 | 40 | - | O | 30 | 55 | 15 | 0 | 0 | 0 | 15 | 15 | 1.4 | 1.2 |
| 11 | Water EtOH | YF3 | 1.2 | 40 | O | O | 35 | 50 | 15 | 0 | 0 | 0 | 15 | 15 | 1.3 | 1.2 |
| 12 | Water | YF3 | 4.4 | 40 | - | O | 15 | 55 | 30 | 0 | 0 | 0 | 30 | 30 | 1.4 | 1.2 |
| 13 | Water | Y5O4F7 | 0.012 | 25 | - | O | 70 | 0 | 15 | 0 | 0 | 15 | 36 | 27 | 1.2 | 1.3 |
| 14 | EtOH | Y5O4F7 | 0.012 | 25 | O | O | 75 | 0 | 15 | 0 | 0 | 10 | 29 | 23 | 1.2 | 1.3 |
| 15 | EtOH | Y5O4F7 | 0.012 | 20 | O | O | 75 | 0 | 15 | 0 | 0 | 10 | 29 | 23 | 1.2 | 1.3 |
| 16 | Water | Y5O4F7 | 1.2 | 40 | - | O | 15 | 0 | 35 | 0 | 0 | 50 | 105 | 75 | 1.4 | 1.6 |
| 17 | Water | Y5O4F7 | 1.2 | 40 | - | O | 15 | 0 | 35 | 0 | 0 | 50 | 105 | 75 | 1.4 | 1.6 |
| 18 | Water EtOH | Y5O4F7 | 1.2 | 40 | O | O | 15 | 0 | 40 | 0 | 0 | 45 | 103 | 76 | 1.4 | 1.6 |
| 19 | Water | Y5O4F7 | 1.2 | 40 | - | O | 15 | 0 | 35 | 0 | 0 | 50 | 105 | 75 | 1.4 | 1.6 |
| 20 | Water | Y5O4F7 | 1.2 | 40 | - | O | 15 | 0 | 35 | 0 | 0 | 50 | 105 | 75 | 1.4 | 1.6 |

**Table 4b**

| Sample | Thermal spray slurry (from Tables 1a, 1b) | | | | Coating properties | | Relative X-ray diffraction peak strength of coating | | | | | | | | Plasma erosion resistance | |
|---|---|---|---|---|---|---|---|---|---|---|---|---|---|---|---|---|
| | Dispersion medium | Type of particles | Average particle di. (µm) | Content of particles (% by mass) | HVOF spray | APS spray | Y2O3 | YF3 | YOF | Y7O6F9 | Y6O5F8 | Y5O4F7 | Y-O-F (F/Y) | Y-O-F (O/Y) | F plasma | Cl plasma |
| 21 | EtOH | Y5O4F7 | 1.2 | 70 | O | O | 20 | 0 | 40 | 0 | 0 | 40 | 96 | 72 | 1.3 | 1.5 |
| 22 | EtOH | Y5O4F7 | 1.2 | 70 | O | O | 20 | 0 | 40 | 0 | 0 | 40 | 96 | 72 | 1.3 | 1.5 |
| 23 | Water | Y5O4F7 | 2.5 | 30 | X | O | 10 | 0 | 25 | 0 | 0 | 65 | 116 | 77 | 1.5 | 1.8 |
| 24 | EtOH | Y5O4F7 | 2.5 | 30 | O | O | 10 | 0 | 30 | 0 | 0 | 60 | 114 | 78 | 1.6 | 1.8 |
| 25 | Water | Y5O4F7 | 4.4 | 40 | - | O | 5 | 0 | 20 | 0 | 0 | 75 | 125 | 80 | 1.7 | 1.9 |
| 26 | Water | YOF | 0.012 | 5 | X | x | - | - | - | - | - | - | - | - | - | - |
| 27 | Water | YOF | 1.2 | 70 | - | x | - | - | - | - | - | - | - | - | - | - |
| 28 | Water | YOF | 1.2 | 90 | - | - | - | - | - | - | - | - | - | - | - | - |
| 29 | Water | YOF | 1.2 | 40 | - | O | 70 | 0 | 30 | 0 | 0 | 0 | 30 | 30 | 1.2 | 1.3 |
| 30 | Water EtOH | YOF | 1.2 | 40 | O | O | 75 | 0 | 25 | 0 | 0 | 0 | 25 | 25 | 1.1 | 1.2 |
| 31 | EtOH | YOF | 1.2 | 70 | O | O | 80 | 0 | 20 | 0 | 0 | 0 | 20 | 20 | 1.1 | 1.2 |
| 32 | Water | YOF | 1.3 | 30 | X | O | 70 | 0 | 30 | 0 | 0 | 0 | 30 | 30 | 1.2 | 1.3 |
| 33 | EtOH | YOF | 1.3 | 30 | O | O | 80 | 0 | 20 | 0 | 0 | 0 | 20 | 20 | 1.1 | 1.2 |
| 34 | Water | YOF | 4.4 | 40 | - | O | 55 | 0 | 45 | 0 | 0 | 0 | 45 | 45 | 1.3 | 1.4 |
| 35 | Water | 10% YF3 + 90% YOF | 3.1 | 30 | - | O | 32 | 3 | 65 | 0 | 0 | 0 | 65 | 65 | 1.5 | 1.5 |
| 36 | EtOH iso-PrOH n-PrOH | 22% YF3 + 78% YOF | 3.8 | 30 | O | - | 33 | 14 | 53 | 0 | 0 | 0 | 53 | 53 | 1.6 | 1.6 |
| 37 | Water | Y5O6F9 | 2.9 | 30 | - | O | 20 | 0 | 40 | 40 | 0 | 0 | 91 | 74 | 1.5 | 1.9 |
| 38 | EtOH iso-PrOH n-PrOH | Y6O5F8 | 2.5 | 30 | O | - | 20 | 0 | 40 | 0 | 40 | 0 | 93 | 73 | 1.5 | 1.9 |

As shown in Table 4, the coating property evaluations were all good with thermal spray slurries conforming to the provisions of this application. Although this is not shown in Table 4, because the thermal spray slurries conforming to the provisions of this application used relatively fine particles with an average particle diameter of 10 µm or less, all of the resulting thermal spray coatings with very dense coatings with a porosity of 10% or less.

By contrast, with the thermal spray slurry of Sample 26 the thermal spray efficiency was too low due to the low content of thermal spray particles (5% by mass), so it was deemed unsuitable as a thermal spray slurry. Moreover, it would probably be difficult to prepare thermal spray slurries with the thermal spray slurries of Samples 5, 6, 9 and 28 because the contents of the thermal spray particles (80% by mass or 90% by mass) were too high. Sample 27 was deemed unsuitable as a thermal spray slurry due to low fluidity because the viscosity was too high at 885 mPa·s.

From a comparison of the plasma erosion resistance of thermal spray coatings obtained from thermal spray slurries using thermal spray particles of the same average particle diameter, it appears that oxidative decomposition of the coated components can be controlled when the concentration of the thermal spray particles contained in the thermal spray slurry is high, which tends to produce better plasma erosion resistance. However, it was found that if the concentration of the thermal spray particles is too high, the plasma erosion resistance of the resulting coating is reduced due to problems of fluidity. Consequently, the solids concentration of the slurry is more preferably about 30% by mass to 60% by mass.

From a comparison of the plasma erosion resistance of thermal spray coatings obtained from thermal spray slurries using water alone, ethanol alone or a mixed solution of water and ethanol as the dispersion medium, it appears that oxidative decomposition of the thermal spray particles is more likely with a thermal spray slurry comprising a mixed solution. This shows that water alone or ethanol alone is preferably to a mixed solution of water and ethanol as the dispersion medium.

From a comparison of the plasma erosion resistance of thermal spray coatings obtained from thermal spray slurries with the same composition and content of the thermal spray particles, it appears that oxidative decomposition of the thermal spray coating components tends to be less the larger the average particle diameter of the thermal spray particles. Thus, the thermal spray particles are preferably about 1 µm to 6 µm in size.

From a comparison of the plasma erosion resistance of thermal spray coatings obtained from the thermal spray slurries of Samples 32 to 36, it appears that plasma erosion resistance tends to be greater when using YOF thermal spray particles if a very small amount of YF₃ is mixed in.

It was also shown that when yttrium oxyfluoride was used for the thermal spray particles, the plasma erosion resistance of the thermal spray coating was increased with a thermal spray slurry containing thermal spray particles with a composition containing a greater proportion of fluoride.

The present disclosure was explained in detail above, but these are only examples, and do not in any way restrict the claims. The technology described in the claims also encompasses various changes and modifications to the specific examples given above.

## Claims

1. A thermal spray slurry comprising:
thermal spray particles comprising a compound containing yttrium (Y), oxygen (O) and a halogen element (X) as constituent elements, the molar ratio of the halogen element to yttrium (X/Y) being greater than 1, and the thermal spray particles being present in an amount of 10% by mass or more and 70% by mass or less, wherein the thermal spray particles comprise at least one selected from the group consisting of Y₅O₄F₇, Y₆O₅F₈, Y₇O₆F₉ and Y₁₇O₁₄F₂₃ in an amount of at least 95% by mass, and wherein the halogen element (X) is fluorine, and the thermal spray particles comprise yttrium oxyfluoride;
a dispersion medium; and
a dispersant; and wherein
the viscosity of the thermal spray slurry is 300 mPa·s or less.

2. The thermal spray slurry of Claim 1, wherein the sedimentation rate of the thermal spray particles contained in the thermal spray slurry is 30 µm/second or more.

3. The thermal spray slurry of Claim 1 or 2, further comprising a viscosity adjuster.

4. The thermal spray slurry of any one of Claims 1 to 3, further comprising an agglomerating agent.

5. The thermal spray slurry of any one of Claims 1 to 4, wherein the average particle diameter of the thermal spray particles is 1 nm to less than 200 nm.

6. The thermal spray slurry of any one of Claims 1 to 4, wherein the average particle diameter of the thermal spray particles is 200 nm to 6 µm.

7. A thermal spray coating that is a thermal spray deposit of the thermal spray slurry of any one of Claims 1 to 6.

8. A method for forming a thermal spray coating, the method comprising:
thermal spraying the thermal spray slurry of any one of Claims 1 to 6 to form a thermal spray coating.

9. The method for forming a thermal spray coating of Claim 8, wherein the thermal spray coating is formed by high-velocity flame spraying.

10. The method for forming a thermal spray coating of Claim 8 or 9, wherein the thermal spray slurry is supplied to a thermal spray system by axial feed.

11. The method for forming a thermal spray coating of any one of Claims 8 to 10, wherein the thermal spray slurry is supplied to a thermal spray system using two feeders in such a way that a fluctuation cycles of the amounts of thermal spray slurry supplied from the two feeders are in reverse phases to one another.

12. The method for forming a thermal spray coating of any one of Claims 8 to 10, wherein the thermal spray slurry is sent from a feeder and first accumulated in a tank immediately equipped before the thermal spray system, and the thermal spray slurry in the tank is then supplied to the thermal spray system using natural gravity.

13. The method for forming a thermal spray coating of any one of Claims 8 to 12, including a step of supplying the thermal spray slurry to the thermal spray system via an electrically conductive tube.

## Patentansprüche

1. Thermische Sprühaufschlämmung umfassend:
thermische Sprühpartikel, umfassend eine Verbindung, enthaltend Yttrium (Y), Sauerstoff (O) und ein Halogenelement (X) als Bestandteile, wobei das Molverhältnis des Halogenelements zu Yttrium (X/Y) größer als 1 ist und die thermischen Sprühpartikel in einer Menge von 10 Massenprozent oder mehr und 70 Massenprozent oder weniger vorhanden sind, wobei die thermischen Sprühpartikel mindestens eines aus der Gruppe bestehend aus YsO₄F₇, Y₆O₅F₈, Y₇O₆F₉ und Y₁₇O₁₄F₂₃ in einer Menge von mindestens 95 Massenprozent umfassen, und wobei das Halogenelement (X) Fluor ist und die thermischen Sprühpartikel Yttriumoxyfluorid umfassen;
ein Dispersionsmedium; und
ein Dispergiermittel; und wobei
die Viskosität der thermischen Sprühaufschlämmung 300 mPa· s oder weniger beträgt.

2. Die thermische Sprühaufschlämmung nach Anspruch 1, wobei die Sedimentationsrate der in der thermischen Sprühaufschlämmung enthaltenen Partikel 30 µm/Sekunde oder mehr beträgt.

3. Die thermische Sprühaufschlämmung nach Anspruch 1 oder 2, weiter umfassend ein Viskositätseinstellmittel.

4. Die thermische Sprühaufschlämmung nach irgendeinem der Ansprüche 1 bis 3, weiter umfassend ein Agglomerationsmittel.

5. Die thermische Sprühaufschlämmung nach irgendeinem der Ansprüche 1 bis 4, wobei der durchschnittliche Partikeldurchmesser der thermischen Sprühpartikel 1 nm bis weniger als 200 nm beträgt.

6. Die thermische Sprühaufschlämmung nach irgendeinem der Ansprüche 1 bis 4, wobei der durchschnittliche Partikeldurchmesser der thermischen Sprühpartikel 200 nm bis 6 µm beträgt.

7. Thermische Sprühbeschichtung, die eine thermische Sprühabscheidung der thermischen Sprühaufschlämmung nach irgendeinem der Ansprüche 1 bis 6 ist.

8. Verfahren zum Bilden einer thermischen Sprühbeschichtung, wobei das Verfahren umfasst:
thermisches Sprühen der thermischen Sprühaufschlämmung nach irgendeinem der Ansprüche 1 bis 6, um eine thermische Sprühbeschichtung zu bilden.

9. Das Verfahren zum Bilden einer thermischen Sprühbeschichtung nach Anspruch 8, wobei die thermische Sprühbeschichtung durch Hochgeschwindigkeitsflammsprühen gebildet wird.

10. Das Verfahren zum Bilden einer thermischen Sprühbeschichtung nach Anspruch 8 oder 9, wobei die thermische Sprühaufschlämmung einem thermischen Sprühsystem durch axiale Zuführung zugeführt wird.

11. Das Verfahren zum Bilden einer thermischen Sprühbeschichtung nach irgendeinem der Ansprüche 8 bis 10, wobei die thermische Sprühaufschlämmung einem thermischen Sprühsystem unter Verwenden von zwei Zuführungen derart zugeführt wird, dass die Fluktuationszyklen der von den beiden Zuführungen zugeführten Mengen an thermischer Sprühaufschlämmung in umgekehrten Phasen zueinander liegen.

12. Das Verfahren zum Bilden einer thermischen Sprühbeschichtung nach irgendeinem der Ansprüche 8 bis 10, wobei die thermische Sprühaufschlämmung von einer Zuführungseinrichtung zugeführt und zunächst in einem unmittelbar vor dem thermischen Sprühsystem angeordneten Tank angesammelt wird und die thermische Sprühaufschlämmung in dem Tank dann unter Verwenden der natürlichen Schwerkraft dem thermischen Sprühsystem zugeführt wird.

13. Das Verfahren zum Bilden einer thermischen Sprühbeschichtung nach irgendeinem der Ansprüche 8 bis 12, beinhaltend einen Schritt des Zuführens der thermischen Sprühaufschlämmung zum thermischen Sprühsystem über ein elektrisch leitendes Rohr.

## Revendications

1. Suspension pour projection thermique comprenant :
des particules de projection thermique comprenant un composé contenant de l'yttrium (Y), de l'oxygène (O) et un halogène (X) en tant qu'éléments constitutifs, le rapport molaire de l'halogène à l'yttrium (X/Y) étant supérieur à 1, et les particules de projection thermique étant présentes à hauteur de 10 % en masse ou plus et 70 % en masse ou moins, dans laquelle les particules de projection thermique comprennent au moins un composé choisi dans le groupe constitué par Y₅O₄F₇, Y₆O₅F₈, Y₇O₆F₉ et Y₁₇O₁₄F₂₃ à hauteur d'au moins 95 % en masse, et dans laquelle l'halogène (X) est le fluor, et les particules de projection thermique comprennent de l'oxyfluorure d'yttrium ;
un milieu de dispersion ; et
un dispersant ; et dans laquelle
la viscosité de la suspension pour projection thermique est inférieure ou égale à 300 mPa·s.

2. Suspension pour projection thermique selon la revendication 1, dans laquelle la vitesse de sédimentation des particules de projection thermique contenues dans la suspension pour projection thermique est supérieure ou égale à 30 µm/seconde.

3. Suspension pour projection thermique selon la revendication 1 ou 2, comprenant en outre un agent d'ajustement de la viscosité.

4. Suspension pour projection thermique selon l'une quelconque des revendications 1 à 3, comprenant en outre un agent agglomérant.

5. Suspension pour projection thermique selon l'une quelconque des revendications 1 à 4, dans laquelle le diamètre moyen de particule des particules de projection thermique va de 1 nm à moins de 200 nm.

6. Suspension pour projection thermique selon l'une quelconque des revendications 1 à 4, dans laquelle le diamètre moyen de particule des particules de projection thermique va de 200 nm à 6 µm.

7. Revêtement par projection thermique qui est un dépôt par projection thermique de la suspension pour projection thermique selon l'une quelconque des revendications 1 à 6.

8. Procédé de formation d'un revêtement par projection thermique, le procédé comprenant :
la projection thermique de la suspension pour projection thermique selon l'une quelconque des revendications 1 à 6 afin de former un revêtement par projection thermique.

9. Procédé de formation d'un revêtement par projection thermique selon la revendication 8, dans lequel le revêtement par projection thermique est formé par projection haute vitesse à la flamme.

10. Procédé de formation d'un revêtement par projection thermique selon la revendication 8 ou 9, dans lequel la suspension pour projection thermique est fournie à un système de projection thermique par alimentation axiale.

11. Procédé de formation d'un revêtement par projection thermique selon l'une quelconque des revendications 8 à 10, dans lequel la suspension pour projection thermique est fournie à un système de projection thermique à l'aide de deux alimentateurs d'une manière telle que des cycles de fluctuation des quantités de suspension pour projection thermique fournies par les deux alimentateurs ont des phases inverses l'une de l'autre.

12. Procédé de formation d'un revêtement par projection thermique selon l'une quelconque des revendications 8 à 10, dans lequel la suspension pour projection thermique est envoyée depuis un alimentateur et d'abord accumulée dans un réservoir situé immédiatement avant le système de projection thermique, et la suspension pour projection thermique contenue dans le réservoir est ensuite fournie au système de projection thermique à l'aide de la pesanteur naturelle.

13. Procédé de formation d'un revêtement par projection thermique selon l'une quelconque des revendications 8 à 12, comportant une étape consistant à fournir la suspension pour projection thermique au système de pulvérisation thermique par l'intermédiaire d'un tube électroconducteur.
